# EUROPEAN PATENT APPLICATION

(11) **EP 4 057 111 A1**
(43) Date of publication of application: **14.09.2022**
(21) Application number: 22160874.8
(22) Date of filing: 08.03.2022
(51) Int. Cl.: G06F 3/01, B64D 11/00, G06F 1/16, G06F 3/04815

(54) **INFLIGHT HAPTIC INTEGRATED ENTERTAINMENT SYSTEM**

(30) Priority: 08.03.2021 IN 202141009580
(71) Applicant: Goodrich Aerospace Services Pvt Ltd, KR Puram, Hobli Karnataka (IN)
(72) Inventor: BANERJI, MADHULIKA, 500003 Secunderabad (IN)
(74) Representative: Dehns

(57) **Abstract**

A system (100) comprises an in-flight entertainment (IFE) display (102). A controller (104) is operatively connected to the IFE to control content displayed on the IFE display. A projection system (106) configured to project a menu (108) to a user (101) is operatively connected to the controller. The controller controls the content displayed based on user input sections from the menu.

## Description

### BACKGROUND

### 1. Field

The present disclosure generally relates to in-flight entertainment (IFE), and more particularly to controlling IFE systems.

### 2. Description of Related Art

There are two typical methods to inflight entertainment systems. The first method provides personal television in the seatbacks or tucked in the armrest of the passenger seats. In this scenario, airlines that provide personal television in the seatbacks must sanitize each device after every use. This is not only a costly process but also a tedious process and can be prone to human lapses.

The second method is allowing the passengers to use their own devices. In the second scenario, the onus of sanitizing the device lies with the passenger as the passenger is using his or her own device. Another issue arises when pairing personal devices with public Wi-Fi: the personal devices may be prone to hacking and/or personal data leak.

The conventional techniques have been considered satisfactory for their intended purpose. However, there is an ever present need for improved systems and methods for contact free control of inflight entertainment. This disclosure provides a solution for this need.

### SUMMARY

A system comprises an in-flight entertainment (IFE) display. A controller is operatively connected to the IFE to control content displayed on the IFE display. A projection system configured to project a menu to a user is operatively connected to the controller. The controller controls the content displayed based on user input sections from the menu. The menu items can include at least one of a map application, a movie application, an audio application, and/or a game application.

A tangible input device configured to provide input to the controller for at least one of volume, brightness, power, can be included. The tangible input device does not provide input to the menu. The projection system can be configured to receive user input only for the menu system but not for volume, brightness, power. A camera can be operatively connected to the controller and configured to receive gesture input from a user. The controller can be configured to activate the projection system upon receipt of gesture input from a user.

The projection system can include an optical projection system configured to simulate three-dimensional objects to a user. A haptic projection system configured to provide haptic feedback to the user can also be included. The projection system can be configured to project the three-dimensional objects and the haptic feedback to the user in overlapping respective simulation spaces in mid-air so that both the three-dimensional objects and the haptic feedback simulate physical objects for user interaction. The optical projection system can include a set of pixels in the IFE display, overlaid with a parallax barrier, and the haptic projection system can include an ultrasonic wave projector.

A method of control for an in-flight entertainment (IFE) system can include projecting an IFE menu system to a user by forming a mid-air projection of menu items, receiving touchless input from a user making a selection from the menu items, deactivating the IFE menu system to retract the mid-air projection, and displaying program content on an IFE display based on user selection from the menu items.

The method can include receiving touchless gesture input from the user and activating the IFE menu system in response to the touchless gesture input. The method can include receiving touchless gesture input from the user and interrupting the program content in response and projecting the IFE menu system after completion of displaying the program content. Further the method can include receiving input from a tangible input device during displaying the program content on the IFE display.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic perspective view of an embodiment of an IFE display constructed in accordance with the present disclosure, showing a user interact with a projected IFE system;
Fig. 2 is a schematic side exploded view of the IFE system of Fig. 1.

### DETAILED DESCRIPTION

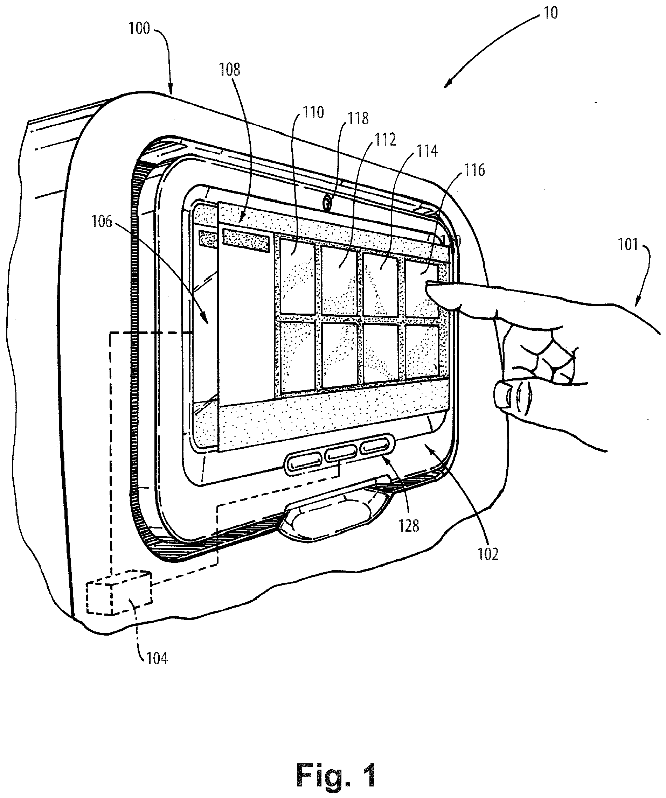

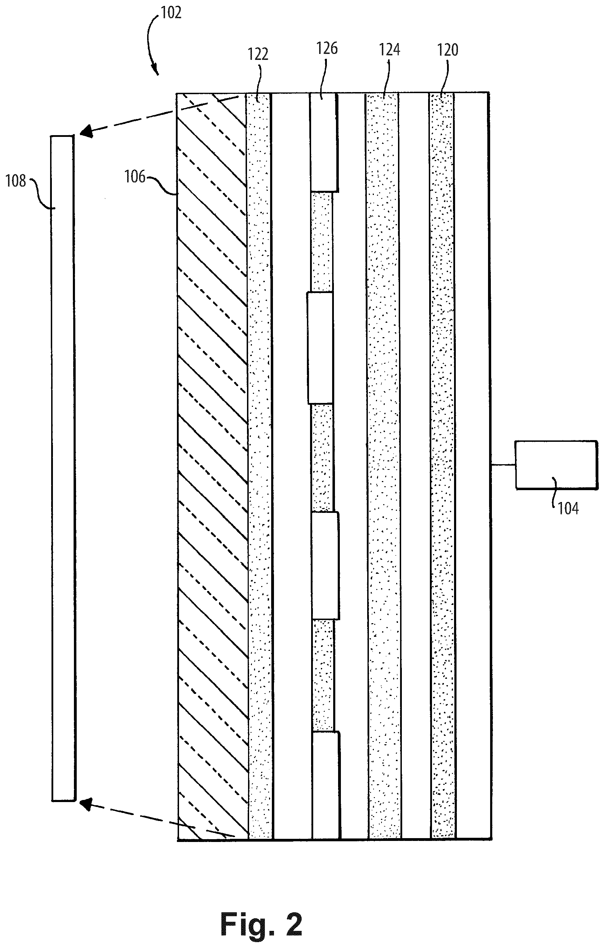

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to reduce the number of touchpoints in an aircraft interior.

Shown in Fig. 1, a system 100 comprises an in-flight entertainment (IFE) display 102. A controller 104 can be operatively connected to the IFE display 102 to control content displayed on the IFE display 102. A projection system 106 can be operatively connected to the controller 104 and configured to project a menu 108 to a user 101. The controller 104 can be configured to activate the projection system 106 upon receipt of gesture input from the user 101 and a camera 118 can be operatively connected to the controller 104 to receive the gesture input from the user 101. The gesture input captured by the camera 118 can cause the controller 104 to control the content displayed based on user input selections from the menu 108 (e.g. the gesture input). For example, the menu items can include at least one of a map application 110, a movie application 112, an audio application 114, and/or a game application 116, and once an item is selected, the controller 104 can display the selected content on the IFE display 102.

The projection system 106 can include an optical projection system 120 configured to simulate three-dimensional objects to the user 101. As shown in Fig. 3, the optical projection system 120 can include a set of pixels 124 in the IFE display 102, overlaid with a parallax barrier 126, for example to display the menu 108 in mid-air such that each menu item 110, 112, 114, 116 can each be an individual three-dimensional object. The projection system 106 can also include a haptic projection system 122 configured to provide haptic feedback to the user 101, for example using an ultrasonic wave projector. The projection system 106 can be configured to project the three-dimensional objects (e.g. menu items) and the haptic feedback to the user 101 in overlapping respective simulation spaces (e.g. in the same plane in mid-air ) so that both the three-dimensional objects and the haptic feedback simulate physical objects for user interaction.

A tangible input device 128 (e.g. buttons placed in arm rest or integrated into the IFE 102 itself) can be included in a passenger unit 10 and operatively connected to the IFE 102, configured to provide additional input to the controller such as input for controlling volume, brightness, power, and the like. It is contemplated that the tangible input device 128 does not provide input to the menu 108, while the projection system 106 is configured to receive user input only for the menu 108, but not for input controlled by the tangible input device 128.

A method of controlling the IFE display 102 can include receiving touchless gesture input from the user 101 and activating the IFE display 102 to display the menu 108 in response to the touchless gesture input. Displaying the menu 108 to a user 101 can include forming a mid-air projection of menu items 110, 112, 114, 116. The IFE display 102 and controller 104 can receive touchless input from the user 101 making a selection from the menu items 110, 112, 114, 116. Once a selection is made, the IFE display 102 can be deactivated so that the mid-air projection (e.g. menu 108) is retracted and the selected content can be displayed on the IFE display 102. During the display of the selected content, touchless gesture input from the user 101 can be received to interrupt the displayed content to activate the IFE display 102 and project the menu 108 after completion of displaying the program content. Certain parameters (e.g. volume, brightness) of the displayed content can be controlled during the program content, without activating the menu 108 on the IFE display 102, for example using the tangible input device 128.

Current regulations require the sanitizing of every surface in an aircraft interior. In cases where airlines provide personal television in the seatbacks, each television becomes a touchpoint and must also be sanitized after every use. Such extensive sanitization causes an increase in plane turnover time and can lead to lapses over a period due to human error. The methods and systems of the present disclosure, as described above and shown in the drawings, thus provide for reduced time to sanitize passenger units and increased passenger confidence in cleanliness of the aircraft. Further, a quiet, disturbance free, and contactless method for controlling in-flight entertainment can be provided without users sacrificing their personal data by supplying their own entertainment.

While the apparatus and methods of the subject disclosure have been shown and described, those skilled in the art will readily appreciate that changes and/or modifications may be made thereto without departing from the scope of the claims.

## Claims

1. A system (100) comprising:
an in-flight entertainment, IFE, display (102);
a controller (104) operatively connected to control content displayed on the IFE display; and
a projection system (106) configured to project a menu (108) to a user (101), wherein the projection system is operatively connected to the controller controlling the content displayed based on user input sections from the menu.

2. The system as recited in claim 1, further comprising a tangible input device (128) configured to provide input to the controller for at least one of volume, brightness, power, but not to the menu, and wherein the projection system is configured to receive user input only for the menu system but not for volume, brightness, power.

3. The system as recited in claim 1 or 2, further comprising a camera (118) operatively connected to the controller and configured to receive gesture input from a user, wherein the controller is configured to activate the projection system upon receipt of gesture input from a user.

4. The system as recited in any preceding claim, wherein the projection system includes:
an optical projection system (120) configured to simulate three-dimensional objects to a user; and
a haptic projection system (122) configured to provide haptic feedback to the user.

5. The system as recited in claim 4, wherein the projection system is configured to project the three-dimensional objects and the haptic feedback to the user in overlapping respective simulation spaces in mid-air so the three-dimensional objects and haptic feedback simulate physical objects for user interaction.

6. The system as recited in claim 4 or 5, wherein the optical projection system includes a set of pixels (124) in the IFE display, overlaid with a parallax barrier (126).

7. The system as recited in claim 4, 5, or 6, wherein the haptic projection system includes an ultrasonic wave projector.

8. A method of control for an in-flight entertainment, IFE, system (100):
projecting an IFE menu system to a user (101) by forming a mid-air projection of menu items (110,112,114);
receiving touchless input from a user making a selection from the menu items;
deactivating the IFE menu system to retract the mid-air projection; and
displaying program content on an IFE display based on user selection from the menu items.

9. The method as recited in claim 8, further comprising receiving touchless gesture input from the user and activating the IFE menu system in response to the touchless gesture input.

10. The method as recited in claim 8 or 9, wherein the menu items include at least one of a map application, a movie application, an audio application, and/or a game application.

11. The method as recited in claim 8, 9 or 10, further comprising receiving touchless gesture input from the user and interrupting the program content in response.

12. The method as recited in any of claims 8 to 11, further comprising projecting the IFE menu system after completion of displaying the program content.

13. The method as recited in any of claims 8 to 12, further comprising receiving input from a tangible input device during displaying the program content on the IFE display.

14. The method as recited in any of claims 8 to 13, wherein projecting the IFE menu system includes optically projecting objects and tactile projection of the objects in overlapping respective simulation spaces to simulate physical objects projected mid-air for user interaction.

15. The method as recited in claim 14, wherein optically projecting includes displaying pixels to a user through a parallax barrier, and wherein tactile projection includes projecting ultrasonic waves to simulate tactile response of objects.
